# EUROPEAN PATENT SPECIFICATION

(11) **EP 0 899 997 B1**
(45) Date of publication and mention of the grant of the patent: **08.03.2000**
(21) Application number: 97916515.6
(22) Date of filing: 04.04.1997
(51) Int. Cl.: A01D 17/06, A01D 33/04, B07B 1/15

(54) **AGRICULTURAL SEPARATING DEVICE AND AGRICULTURAL SEPARATOR**
LANDWIRTSCHAFTLICHE TRENNER UND TRENNVORRICHTUNG FÜR LANDWIRTSCHAFTLICHE BENUTZUNG
DISPOSITIF DE SEPARATION A USAGE AGRICOLE ET SEPARATEUR A USAGE AGRICOLE

(30) Priority: 16.04.1996 GB 9607826
(43) Date of publication of application: 10.03.1999
(73) Proprietor: RICHARD PEARSON LIMITED, Boston, Lincolnshire PE22 0JZ (GB)
(72) Inventor: WESTON, David, Booth, Boston, Lincolnshire PE22 0JZ (GB)
(74) Representative: Devons, David Jon
(86) International application number: GB9700962
(87) International publication number: WO9738568

(56) References cited:
- EP-A- 0 410 807
- WO-A-91/08058
- BE-A- 511 963
- DE-A- 3 027 651
- DE-A- 3 636 668
- FR-A- 986 010

## Description

The present invention relates to an agricultural separating device and an agricultural separator including such a device.

It is well-known in the agricultural field to use starwheels when separating materials, eg clod and/or stones from root vegetables or bulbs, eg during harvesting, in de-stoning machines and also in static cleaning or grading equipment. Starwheels have a plurality of resiliently deformable "fingers" arranged around a central hub and are at present formed from polyurethane or rubber, but could be formed from any other suitable material. In use, a plurality of starwheels are mounted on a rotatable shaft, commonly known as a "starshaft".

During use, damp soil may stick to the starwheels, or hard material, eg stones, may become jammed between the starwheels. This will reduce separation and produce wear of the starwheels.

GB 2 145 612 discloses two parallel starshafts arranged upstream of a counter rotating clod roller for use in separating clod and/or stones from root vegetables or bulbs. In practice, the fingers of the starwheels of adjacent starshafts are staggered and fit into the gaps between the starwheels of the adjacent starshaft. In such a position, the starshafts are said to be "interleaved". When separating potatoes, potato haulm can become wrapped around the starshafts, and interleaving the starshafts provides a degree of self-cleaning.

It is also known from EP 0 410 808 to arrange starshafts in a lifting conveyor. Although the starwheels may be interleaved, it is particularly advantageous in a de-stoning machine for there to be a radial gap between the ends of the fingers of the starwheels of adjacent starshafts, ie the starwheels of adjacent starshafts are not interleaved. There is, therefore, no self-cleaning of the starshafts.

WO 91/08058 discloses a disc screen for use in the paper making industry comprising metal screen discs axially spaced along a rotatable shaft by means of plastic spaces. Surround discs are mounted between adjacent metal screen discs and have metallic flanges. Although the plastic spacers are resiliently deformable to allow sideward flexing of the metal screen discs if an object is wedged between the screen discs, the surround discs are sufficiently stiffened to resist any deformation by impinging chips or rocks. As a result, there is no self-cleaning in this area.

BE 511 963 discloses an agricultural separator having separator devices similar to that of GB 2 145 612 and EP 0 410 808 and suffers from the same disadvantages in that there is no self-cleaning of the starshafts.

An object of the present invention is to provide starshafts in which self-cleaning is facilitated.

The invention provides an agricultural separating device having a starshaft comprising a row of resilient starwheels mounted on a rotatable shaft, characterised in that rings formed of resilient material having a maximum hardness of substantially 90 Shore A are mounted between adjacent starwheels so as to provide deformability and additional resilient contact between the outer peripheral surface of the rings and material being separated and drawn down between the starwheels, thereby facilitating self-cleaning of the starshaft.

The effect of providing resilient rings between adjacent starwheels is to enlarge the boss diameter of the starwheels without reducing the length, and therefore flexibility, of the fingers of the starwheels. By enlarging the boss diameter, the area between starwheels into which separated material (soil, small stones and plant material) can be lodged is reduced, thereby reducing the build up of material, and also allowing self-cleaning with a lesser degree of interleaving of the starwheels.

The agricultural separating device may be used in any agricultural separator, eg in a stone and/or clod separator, in a machine for separating clod and/or stones from root vegetables or bulbs, in a harvester and also in static cleaning equipment.

The invention also provides an agricultural separator having first and second adjacent, parallel starshafts each comprising a plurality of flexible starwheels mounted on rotatable shafts, the starwheels on the first starshaft being staggered relative to the starwheels on the second starshaft to allow interleaving of the starwheels of the first and second starshafts, and a clod roller downstream of the second starshaft in a direction of movement, in use, of material being separated, characterised in that the clod roller and second starshaft are movable as a unit relative to the first starshaft so as to vary the degree of interleaving between the starwheels of the first and second starshafts or create and vary a radial spacing between the tips of the fingers of the starwheel of the first and second starshafts.

Such a separator allows adjustment between a first position in which the starwheels are interleaved for self-cleaning, eg during separation of clod and/or stones from potatoes, and a position in which the starwheels of adjacent starshafts are not interleaved, eg during harvesting carrots.

The invention will be further described with reference to embodiments shown in the accompanying drawings, wherein:
Figure 1 shows in plan view parts of two interleaving starshafts of an agricultural separator,
Figure 2 shows in side view a resilient ring of the separator of Figure 1,
Figure 3 shows in side view a starwheel of the separator of Figure 1,
Figure 4 shows diagrammatically in side view an agricultural separator in which one of the starshafts and the clod roller are movable together as a unit relative to an interleaved starshaft, and
Figure 5 shows diagrammatically in side view the separator of Figure 4 in which the starwheels of the starshafts have been separated.

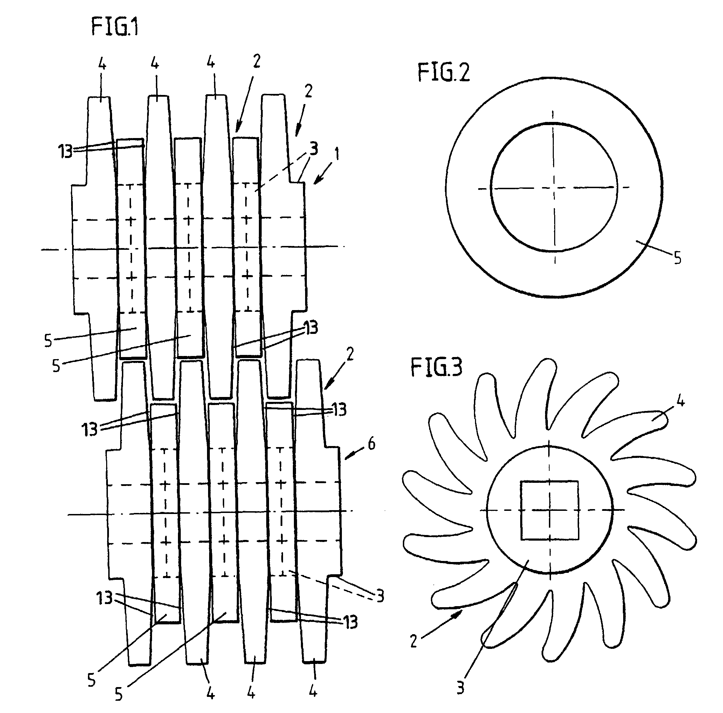

In Figure 1, a first starshaft 1 comprises a plurality of starwheels 2 mounted on a shaft (not shown). Each starwheel 2 has a boss 3 and a plurality of curved, radially-extending resilient fingers 4, as can be seen also from Figure 3. The starwheels are preferably formed from polyurethane or rubber with a resilience depending on the particular use, but could be formed of any other suitable material.

As can be seen from Figure 1, the sides of the bosses 3 of adjacent starwheels 2 abut each other and form a spacer between the fingers of adjacent starwheels.

Resilient rings 5 are mounted on the bosses 3 between adjacent starwheels 2 so as to extend radially along 40-80% of the radial length of the fingers 4, preferably approximately 50%. The rings 5 are formed from resilient material, eg polyurethane, rubber or any other suitable material having a maximum hardness of substantially 90 Shore A, and preferably about 60 Shore A or less. The rings are sufficiently resilient to provide additional grip whilst stones and other material are being drawn down between the starwheel fingers 4.

There is a clearance play between the inner diameter of the ring 5 and the bosses 3 to facilitate fitting of the ring, although this is not essential.

As can be seen from Figure 1 the sides of the fingers 4 of the starwheel 2 taper inwardly away from the rings 5 in a radially outward direction, so as to provide a gap 13 between the ring 5 and the fingers 4, which increases in a radially outward direction. This allows lateral flexing of the fingers 4 when a stone is drawn down between the starwheels. However, the rings 5 would still function reasonably well if the gaps 13 were absent, ie if the sides of the fingers 4 were parallel.

As can be also seen from Figure 1, a second starshaft 6 is arranged parallel to and adjacent the starshaft 1. The starwheels of the starshafts 1 and 6 are staggered so that the fingers 4 of the starwheels 2 of one starshaft enter the gaps between the starwheels 2 of the adjacent starshaft. The starwheels of adjacent shafts 1 and 6 are said to be "interleaved".

As already explained, the resilient rings 5 shown in Figures 1 and 2 may be mounted on starshafts incorporated in an agricultural separator, eg in a root-crop harvester (eg a potato harvester), a de-stoning machine, or in static cleaning or grading apparatus.

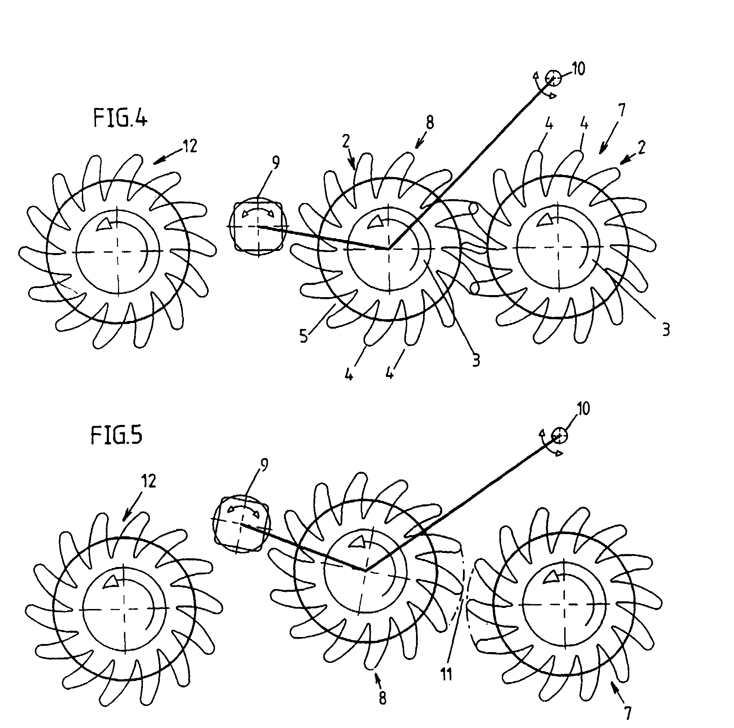

In Figures 4 and 5 an agricultural separator is shown having a pair of adjacent, parallel starshafts 7, 8 arranged upstream of a parallel clod roller 9, which may be arranged to rotate in the same direction as the starshafts 7, 8 (eg when harvesting carrots) or in the opposite direction (eg when harvesting potatoes).

The starshafts 7, 8 shown in Figures 4 and 5 are similar to the starshafts 1, 6 shown in Figure 1, ie they each have a plurality of starwheels 2 having bosses 3 and resilient fingers 4. They also have resilient rings 5 arranged on the bosses 3 between adjacent starwheels, although these rings are not essential and may be omitted altogether.

The downstream starshaft 8 and the clod roller 9 are mounted in the separator as a unit, which is pivotable as a unit about an axis 10 to enable the starshaft 8 to be moved away from the starshaft 7 to alter the degree of interleaving therewith. As can be seen from Figure 5, the pivoting movement may be such as to remove the interleaving altogether, so that there is a radial gap 11 between the tips of the fingers 4 of the starwheels 2 of the starshafts 7 and 8, eg when separating carrots; the pivoting movement may be used to adjust this gap depending on the materials being separated.

Thus, the separator shown in Figures 4 and 5 may be used for separating both carrots and potatoes. When separating potatoes the starwheels are interleaved as shown in Figure 4, whereas when separating carrots the starwheels are as shown in Figure 5.

As already explained, the separator shown in Figures 4 and 5 preferably has the resilient rings 5 mounted on the bosses 3 of the starwheels 2, although the separator will operate without the rings 5.

Alternatively, the separator shown in Figures 4 and 5 could be operated as shown in Figure 5, and moved into the interleaving position of Figure 4 merely for self-cleaning between periods of operation.

An advantage of the separator as shown in Figures 4 and 5 is that the starshafts 7, 8 can be moved apart without altering the overall length of a separating conveyor.

When the separator as shown in Figure 4 is used for harvesting potatoes, the counter-rotating clod roller 9 tends to force potato haulm into the gaps between the starwheels 2 of the starshaft 8. Interleaving of the starwheels 2 of the starshafts 7 and 8 is necessary to remove this haulm. Furthermore, if resilient rings 5 are also arranged on the starshafts 7, 8 between the starwheels 2, the degree of interleaving required to produce self-cleaning is substantially less.

The group of the starshafts 7, 8 and clod roller 9 as shown in Figures 4 and 5 may be arranged in series with one or more similar groups to form a separating surface in which the downstream starshaft and clod roller of each group are pivotable as a unit relative to the respective upstream starshaft. Thus, in Figures 4 and 5 the starshaft 12 shown on the left of each Figure could be the upstream starshaft of a further group comprising two starshafts and a clod roller.

## Claims

1. An agricultural separating device having a starshaft (1) comprising a row of resilient starwheels (2) mounted on a rotatable shaft, characterised in that rings (5) formed of resilient material having a maximum hardness of substantially 90 Shore A are mounted between adjacent starwheels (2) so as to provide deformability and additional resilient contact between the outer peripheral surface of the rings (5) and material being separated and drawn down between the starwheels (2), thereby providing self-cleaning of the starshaft (1).

2. An agricultural separating device as claimed in Claim 1, wherein the rings (5) are mounted on bosses (3) of adjacent starwheels (2) with clearance play between the rings (5) and the bosses (3) to facilitate mounting of the rings on the bosses.

3. An agricultural separating device as claimed in Claim 1 or 2, wherein there is a gap (13) between the sides of the fingers (4) and the ends of the rings to facilitate lateral flexing of the fingers (4).

4. An agricultural separating device as claimed in any one of the preceding claims, wherein the outer diameter of the rings (5) is such that they extend radially along 40-80% of the radial length of the fingers (4) of the starwheels (2).

5. An agricultural separating device as claimed in any one of the preceding claims, wherein the rings are formed of rubber or polyurethane.

6. An agricultural separating device as claimed in any one of Claims 1 to 5, wherein the rings have a hardness of substantially 60 Shore A or less.

7. An agricultural separator including an agricultural separating device as claimed in any one of the preceding claims.

8. An agricultural separator including at least two agricultural separating devices as claimed in any one of Claims 1 to 6, wherein the starshafts (7, 8) are arranged adjacent and parallel to each other.

9. An agricultural separator as claimed in Claim 8, wherein the starwheels (2) of the starshafts (7, 8) are staggered and the tips of the starwheels of the adjacent starshafts (7, 8) interleave.

10. An agricultural separator as claimed in Claim 8, wherein the starwheels (2) of the starshafts (7, 8) are staggered and the tips of the starwheels of the starshafts (7, 8) are spaced in a radial direction.

11. An agricultural separator as claimed in Claim 8, 9 or 10, wherein a clod roller (9) is arranged adjacent and parallel to the downstream starshaft (8) in the direction of movement, in use, of material being separated.

12. An agricultural separator as claimed in Claim 11, wherein the clod roller (9) and the downstream starshaft (8) are movable as a unit relative to the adjacent upstream starshaft (7) so as to vary the degree of interleaving between the starwheels (2) of the said upstream and the downstream starshafts (7, 8) or to create or vary a radial spacing (11) between the tips of the fingers (4) of the starwheels (2) of the said upstream and downstream starshafts (7, 8).

13. An agricultural separator as claimed in Claim 12, wherein the clod roller (9) and the said downstream starshaft (8) are pivotally movable relative to the said upstream starshaft (7).

14. An agricultural separator as claimed in Claim 13, wherein the clod roller (9) and the said downstream starshaft (8) are pivotally movable about an axis (10) above and upstream of the said downstream starshaft (8).

15. An agricultural separator having first and second adjacent, parallel starshafts (7, 8) each comprising a plurality of flexible starwheels (2) mounted on rotatable shafts, the starwheels (2) on the first starshaft (7) being staggered relative to the starwheels (2) on the second starshaft (8) to allow interleaving of the starwheels (2) of the first and second starshafts (7, 8), and a clod roller (9) downstream of the second starshaft (8) in a direction of movement, in use, of material being separated, characterised in that the clod roller (9) and second starshaft (8) are movable as a unit relative to the first starshaft (7) so as to vary the degree of interleaving between the starwheels (2) of the first and second starshafts (7, 8) or to create or vary a radial spacing (11) between the tips of the fingers (4) of the starwheels (2) of the first and second starshafts (7, 8).

16. An agricultural separator as claimed in Claim 15, wherein the clod roller (9) and second starshaft (8) are pivotally movable relative to the first starshaft (7).

17. An agricultural separator as claimed in Claim 16, wherein the clod roller (9) and second starshaft (8) are pivotally movable about an axis (10) above and upstream of the second starshaft (8).

## Patentansprüche

1. Landwirtschaftliche Trennvorrichtung mit einer Sternwelle (1), die eine Reihe von federnden Sternrädern (2) aufweist, die an einer drehbaren Welle angebracht sind, dadurch gekennzeichnet, daß Ringe (5) aus federndem Material, das eine maximale Shorehärte A von im wesentlichen 90 aufweist, zwischen benachbarten Sternrädern (2) angebracht sind, um für Verformbarkeit und zusätzliche federnde Berührung zwischen der Außenumfangsfläche der Ringe (5) und dem Material zu sorgen, das getrennt und zwischen den Sternrädern (2) nach unten gezogen wird, wodurch die Selbstreinigung der Sternwelle (1) erleichtert wird.

2. Landwirtschaftliche Trennvorrichtung wie beansprucht in Anspruch 1, worin die Ringe (5) an Nabenaugen (3) benachbarter Sternräder (2) angebracht sind, mit Spiel zwischen den Ringen (5) und den Nabenaugen (3), um die Anbringung der Ringe an den Nabenaugen zu erleichtern.

3. Landwirtschaftliche Trennvorrichtung wie beansprucht in Anspruch 1 oder 2, worin ein Spalt (13) zwischen den Seiten der Finger (4) und den Enden der Ringe vorliegt, um eine seitliche Verbiegung der Finger (4) zu erleichtern.

4. Landwirtschaftliche Trennvorrichtung wie beansprucht in irgendeinem der vorausgehenden Ansprüche, worin der Außendurchmesser der Ringe (5) so ist, daß sie sich radial längs 40-80% der radialen Länge der Finger (4) der Sternräder (2) erstrecken.

5. Landwirtschaftliche Trennvorrichtung wie beansprucht in irgendeinem der vorangehenden Ansprüche, worin die Ringe aus Gummi oder Polyurethan gebildet sind.

6. Landwirtschaftliche Trennvorrichtung wie beansprucht in irgendeinem der Ansprüche 1 bis 5, worin die Ringe eine Shorehärte A im wesentlichen von 60 oder weniger aufweisen.

7. Landwirtschaftliche Trenneinrichtung mit einer landwirtschaftlichen Trennvorrichtung, wie beansprucht in irgendeinem der vorangehenden Ansprüche.

8. Landwirtschaftliche Trenneinrichtung mit mindestens zwei landwirtschaftlichen Trennvorrichtungen, wie beansprucht in irgendeinem der Ansprüche 1 bis 6, worin die Sternwellen (7, 8) nebeneinanderliegend und parallel zueinander angeordnet sind.

9. Landwirtschaftliche Trenneinrichtung wie beansprucht in Anspruch 8, worin die Sternräder (2) der Sternwellen (7, 8) zueinander gestaffelt angeordnet sind und die Spitzen der Sternräder der benachbarten Sternwellen (7, 8) ineinander hineingreifen.

10. Landwirtschaftliche Trenneinrichtung wie beansprucht in Anspruch 8, worin die Sternräder (2) der Sternwellen (7, 8) zueinander gestaffelt angeordnet sind und die Spitzen der Sternräder der Sternwellen (7, 8) in radialer Richtung beabstandet sind.

11. Landwirtschaftliche Trenneinrichtung wie beansprucht in Anspruch 8, 9 oder 10, worin eine Klumpenwalze (9) der Sternwelle (8) benachbart und parallel zu dieser angeordnet ist, die bei Gebrauch in Bewegungsrichtung des gerade getrennten Materials nachlaufend bzw. nachfolgend angeordnet ist.

12. Landwirtschaftliche Trenneinrichtung wie beansprucht in Anspruch 11, worin die Klumpenwalze (9) und die nachlaufende Sternwelle (8) als eine Einheit bezüglich der benachbarten vorauslaufenden Sternwelle (7) beweglich sind, um den Eingriffsgrad zwischen den Sternrädern (2) der voraus- und nachlaufenden Sternwelle (7, 8) zu ändern oder um einen Radialabstand (11) zwischen den Spitzen der Finger (4) der Sternräder (2) der voraus- und nachlaufenden Sternwelle (7, 8) zu schaffen oder zu verändern.

13. Landwirtschaftliche Trenneinrichtung wie beansprucht in Anspruch 12, worin die Klumpenwalze (9) und die nachlaufende Sternwelle (8) bezüglich der vorauslaufenden Sternwelle (7) schwenkbeweglich sind.

14. Landwirtschaftliche Trenneinrichtung sie beansprucht in Anspruch 13, worin die Klumpenwalze (9) und die nachlaufende Sternwelle (8) um eine Achse (10) über und vor der nachlaufenden Sternwelle (8) schwenkbeweglich sind.

15. Landwirtschaftliche Trenneinrichtung mit einer ersten und zweiten Sternwelle (7, 8), die benachbart und parallel sind und jeweils eine Vielzahl flexibler Sternräder (2) aufweisen, die an drehbaren Wellen angebracht sind, wobei die Sternräder (2) der ersten Sternwelle (7) bezüglich der Sternräder (2) der zweiten Sternwelle (8) gestaffelt sind, um ein Ineinandergreifen der Sternräder (2) ersten und zweiten Sternwelle (7, 8) zu ermöglichen, und mit einer Klumpenwalze (9) hinter, bei Gebrauch in Bewegungsrichtung des gerade getrennten Materials gesehen, der zweiten Sternwelle (8), dadurch gekennzeichnet, daß die Klumpenwalze (9) und die zweite Sternwelle (8) als eine Einheit bezüglich der ersten Sternwelle (7) beweglich sind, um den Grad des Ineinandergreifens zwischen den Sternrädern (2) der ersten und zweiten Sternwelle (7, 8) zu ändern oder einen radialen Zwischenraum (11) zwischen den Spitzen der Finger (4) des Sternrades (2) der ersten und zweiten Sternwelle (7, 8) zu schaffen oder zu verändern.

16. Landwirtschaftliche Trenneinrichtung wie beansprucht in Anspruch 15, worin die Klumpenwalze (9) und die zweite Sternwelle (8) bezüglich der ersten Sternwelle (7) schwenkbeweglich sind.

17. Landwirtschaftliche Trenneinrichtung wie beansprucht in Anspruch 16, worin die Klumpenwalze (9) und die zweite Sternwelle (8) um eine Achse (10) über und vor der zweiten Sternwelle (8) schwenkbeweglich sind.

## Revendications

1. Dispositif de séparation à usage agricole comprenant un arbre-étoile (1) qui comprend une rangée de roues-étoiles (2) élastiques montées sur un arbre rotatif, caractérisé en ce que des anneaux (5) formés d'un matériau élastique ayant une dureté maximum équivalant essentiellement à 90 Shore A sont montés entre les roues-étoiles (2) adjacentes de manière à procurer une capacité de déformation et un contact élastique supplémentaire entre la surface périphérique externe des anneaux (5) et le matériau qui est séparé et entraîné vers le bas entre les roues-étoiles (2), fournissant ainsi un auto-nettoyage de l'arbre-étoile (1).

2. Dispositif de séparation à usage agricole selon la revendication 1, dans lequel les anneaux (5) sont montés sur des protubérances (3) des roues-étoiles (2) adjacentes avec un jeu entre les anneaux (5) et les protubérances (3) pour faciliter le montage des anneaux sur les protubérances.

3. Dispositif de séparation à usage agricole selon la revendication 1 ou 2, dans lequel il existe un intervalle (13) entre les côtés des doigts (4) et les extrémités des anneaux afin de faciliter la flexion latérale des doigts (4).

4. Dispositif de séparation à usage agricole selon l'une quelconque des revendications précédentes, dans lequel le diamètre extérieur des anneaux (5) est tel qu'ils s'étendent, dans le sens radial, sur 40-80% de la longueur radiale des doigts (4) des roues-étoiles (2).

5. Dispositif de séparation à usage agricole selon l'une quelconque des revendications précédentes, dans lequel les anneaux sont en caoutchouc ou en polyuréthane.

6. Dispositif de séparation à usage agricole selon l'une quelconque des revendications 1 à 5, dans lequel les anneaux ont une dureté équivalant essentiellement à 60 Shore A ou moins.

7. Séparateur à usage agricole incluant un dispositif de séparation à usage agricole selon l'une quelconque des revendications précédentes.

8. Séparateur à usage agricole incluant au moins deux dispositifs de séparation à usage agricole selon l'une quelconque des revendications 1 à 6, dans lequel les arbres-étoiles (7, 8) sont disposés de manière adjacente et parallèle l'un à l'autre.

9. Séparateur à usage agricole selon la revendication 8, dans lequel les roues-étoiles (2) des arbres-étoiles (7, 8) sont décalées et les extrémités des roues-étoiles des arbres-étoiles (7, 8) adjacents sont imbriquées.

10. Séparateur à usage agricole selon la revendication 8, dans lequel les roues-étoiles (2) des arbres-étoiles (7, 8) sont décalées et les extrémités des roues-étoiles des arbres-étoiles (7, 8) sont espacées dans une direction radiale.

11. Séparateur à usage agricole selon la revendication 8, 9 ou 10, dans lequel un rouleau émotteur (9) est situé de manière adjacente et parallèle à l'arbre-étoile d'aval (8) dans la direction correspondant, lors de l'utilisation, au mouvement du matériau en cours de séparation.

12. Séparateur à usage agricole selon la revendication 11, dans lequel le rouleau émotteur (9) et l'arbre-étoile d'aval (8) sont mobiles sous forme d'une unité par rapport à l'arbre-étoile d'amont (7) adjacent de manière à faire varier le degré d'imbrication entre les roues-étoiles (2) desdits arbres-étoiles (7, 8) d'amont et d'aval, ou à créer ou faire varier une distance radiale (11) entre les extrémités des doigts (4) des roues-étoiles (2) desdits arbres-étoiles (7, 8) d'amont et d'aval.

13. Séparateur à usage agricole selon la revendication 12, dans lequel le rouleau émotteur (9) et ledit arbre-étoile d'aval (8) peuvent être déplacés de manière pivotante par rapport au dit arbre-étoile d'amont (7).

14. Séparateur à usage agricole selon la revendication 13, dans lequel le rouleau émotteur (9) et ledit arbre-étoile d'aval (8) peuvent être déplacés de manière pivotante autour d'un axe (10) situé au-dessus et en amont dudit arbre-étoile d'aval (8).

15. Séparateur à usage agricole comprenant un premier et un second arbres-étoiles (7, 8) parallèles et adjacents qui comprennent chacun une pluralité de roues-étoiles (2) flexibles montées sur des arbres rotatifs, les roues-étoiles (2) sur le premier arbre-étoile (7) étant décalées par rapport aux roues-étoiles (2) sur le second arbre-étoile (8) de manière à permettre l'imbrication des roues-étoiles (2) des premier et second arbres-étoiles (7, 8), et un rouleau émotteur (9) situé en aval du second arbre-étoile (8) dans une direction correspondant, lors de l'utilisation, au mouvement du matériau en cours de séparation, caractérisé en ce que le rouleau émotteur (9) et le second arbre-étoile (8) sont mobiles sous forme d'une unité par rapport au premier arbre-étoile (7) de manière à faire varier le degré d'imbrication entre les roues-étoiles (2) des premier et second arbres-étoiles (7, 8), ou à créer ou faire varier une distance radiale (11) entre les extrémités des doigts (4) des roues-étoiles (2) des premier et second arbres-étoiles (7, 8).

16. Séparateur à usage agricole selon la revendication 15, dans lequel le rouleau émotteur (9) et le second arbre-étoile (8) peuvent être déplacés de manière pivotante par rapport au premier arbre-étoile (7).

17. Séparateur à usage agricole selon la revendication 16, dans lequel le rouleau émotteur (9) et le second arbre-étoile (8) peuvent être déplacés de manière pivotante autour d'un axe (10) situé au-dessus et en amont du second arbre-étoile (8).
